# EUROPÄISCHE PATENTSCHRIFT

(11) **EP 3 289 668 B1**
(45) Veröffentlichungstag und Bekanntmachung des Hinweises auf die Patenterteilung: **07.07.2021**
(21) Anmeldenummer: 16716880.6
(22) Anmeldetag: 18.04.2016
(51) Int. Cl.: H02K 1/14, H02K 1/16, H02K 3/32, H02K 3/34

(54) **STATOR MIT ANGEPASSTER ZAHNGEOMETRIE**
STATOR HAVING ADAPTED TOOTH GEOMETRY
STATOR À GÉOMÉTRIE ADAPTÉE DES DENTS

(30) Priorität: 28.04.2015 DE 102015106523
(43) Veröffentlichungstag der Anmeldung: 07.03.2018
(73) Patentinhaber: EBM-Papst Mulfingen GmbH&CO. KG, 74673 Mulfingen (DE)
(72) Erfinder: STURM, Michael, 97980 Bad Mergentheim (DE)
(74) Vertreter: Staeger & Sperling Partnerschaftsgesellschaft mbB
(86) Internationale Anmeldenummer: PCT/EP2016/058551
(87) Internationale Veröffentlichungsnummer: WO 2016/173873

(56) Entgegenhaltungen:
- EP-A2- 1 873 889
- EP-A2- 1 873 889
- WO-A1-2012/026158
- WO-A1-2012/026158
- WO-A1-2013/132775
- JP-A- 2002 335 642
- JP-A- 2002 335 642

## Beschreibung

Die Erfindung betrifft einen Stator eines Elektromotors mit in Umfangsrichtung verteilten, sich in radialer Richtung erstreckenden Zähnen und jeweils zwischen den Zähnen vorgesehenen Nuten, in denen Kupferdrahtwicklungen aufgenommenen werden.

Elektromotoren werden mit Statoren in Umgebungen mit verschiedenen Verschmutzungsgraden eingesetzt. Je höher der Verschmutzungsgrad, desto weiter müssen die stromführenden Bauteile von leitenden Bauteilen entfernt werden, so dass es nicht zu einer ungewollten Entladung, d.h. einem Kurzschluss kommt. Der einzuhaltende Abstand wird dabei durch die Luft- und Kriechstrecke bestimmt, wobei gemäß DIN VDE 0110-04.97 die Luftstrecke definiert ist als kürzeste Entfernung in Luft zwischen zwei leitenden Teilen, und die Kriechstrecke definiert ist als kürzeste Entfernung entlang der Oberfläche eines Isolierstoffes zwischen zwei leitenden Teilen.

Die Luft- und Kriechstrecken müssen insbesondere bei Verschmutzungs- und Feuchtigkeitseinfluss sehr viel länger sein, so dass die umgebende Luft nicht durch sogenannte Vorentladungen ionisiert wird und dadurch der Durchschlag stattfinden kann. Auch dürfen keine Kriech- oder Gleitentladungen entlang der Oberfläche des Isolationswerkstoffs entstehen.

Grundsätzlich gilt, dass wenn ein Stator in einer Umgebung mit stärkerer Verschmutzung (d.h. höherem Verschmutzungsgrad) eingesetzt werden soll, die Luft- und Kriechstrecke länger sein muss. Die hierbei einzuhaltenden Werte bzw. Abstände werden durch entsprechende Normvorgaben definiert. Diese sind abhängig von den Anforderungen sowie den Anwendungsgebieten und werden beispielsweise in den Normen EN61800-5-1, EN60335-1, UL60730-1, UL1004-1 (-7) mit Verweis auf UL840 bestimmt.

Bei der Dimensionierung unterliegt man jedoch bauartbestimmten Restriktionen, so dass der Stator trotz der notwendigen Verlängerung der Luft- und Kriechstrecken aus wirtschaftlichen Gründen nicht vergrößert werden kann. Dabei sollen zudem auch die Leistung, das Drehmoment und der Wirkungsgrad nicht schlechter werden.

Im Stand der Technik werden deshalb teilweise Deckschieber eingesetzt, bei denen die Überlappung jedoch relativ groß sein muss, um eine ausreichende Wirksamkeit zu gewährleisten. Der Prozess ist aufwändig und verschlechtert die Thermik.

Alternativ wurde das Statorpaket nach dem Wickeln vollständig vergossen, so dass es vor Umwelteinflüssen und Verschmutzung geschützt ist. Auch dieser Prozess ist sehr aufwendig und zudem kostenintensiv.

Auch gibt es im Stand der Technik Lösungen, bei denen der Stator vollständig mit Isolationspulverlack beschichtet wird. Hierzu müssen die Statoren jedoch zunächst gesäubert, vorgewärmt und anschließend ein oder mehrmals Wirbelgesintert bzw. beschichtet werden. Auch dieser Prozess ist sehr zeit- und kostenintensiv.

Bei herkömmlichen Statoren ist ferner bekannt, die Nuten mit Kunststoff auszuspritzen. Durch eine Vergrößerung der Nutöffnungsbreite kann dabei mehr Platz für die Umspritzung in der Nutöffnung geschaffen und die Luft- und Kriechstrecke vergrößert werden. Die Nutöffnung wird in der Fachsprache auch "Nutschlitze" genannt. Hierdurch geht jedoch eine unerwünschte Verschlechterung des Motorrastmoments einher, die negativen Einfluss auf die Geräuschentwicklung hat.

Der Erfindung liegt deshalb die Aufgabe zugrunde, bei einem Stator die Luft- und Kriechstrecke auf wirtschaftlichere Weise zu vergrößern, ohne die Leistungsfähigkeit und Geräuschbildung im Betrieb negativ zu beeinflussen. Zudem soll die Einbringbarkeit von Isolationsmaterial in die Nuten verbessert werden.

Druckschriftlicher Stand der Technik im vorliegenden technischen Gebiet ist offenbart in den Dokumenten WO 2013/132775 A1, JP 2002-335642 A, WO 2012/026158 A1 und EP 1 873 889 A2.

Diese Aufgabe wird gelöst durch eine Merkmalskombination gemäß Patentanspruch 1.

Erfindungsgemäß wird dabei ein Stator eines Elektromotors mit in Umfangsrichtung verteilten, sich in radialer Richtung erstreckenden Zähnen und jeweils zwischen den Zähnen vorgesehenen Nuten vorgeschlagen, wobei jeweils benachbarte Zähne an ihren radialen Außenrandabschnitten jeweils eine Nutöffnung (Nutschlitz) bilden und die radialen Außenrandabschnitte der Zähne jeweils einen sich in Umfangsrichtung in die Nutöffnung erstreckenden Vorsprung aufweisen, der jeweils eine nach radial innen gerichtete freie Anlagefläche zur Aufnahme einer Isolierung bildet. Die in Umfangsrichtung an den benachbarten Zähnen vorgesehenen und zueinander weisenden Vorsprünge ermöglichen, die Isolierung in Umfangsrichtung bis zur Nutöffnung und in radialer Richtung bis weiter nach außen vorzusehen, so dass die Luft- und Kriechstrecke von den in den jeweiligen Nuten aufgenommenen Drahtwicklungen zu dem nicht isolierten Statorbereich in dessen radialen Außenrandabschnitte seiner Zähne vergrößert ist. Diese Vergrößerung der Luft- und Kriechstrecke erhöht den Verschmutzungsgrad, in dem der Stator und mithin der Elektromotor einsetzbar ist. Für Innenläuferstatoren wird der erfindungsgemäße Aufbau angepasst, indem die Zähne nach radial innen weisen.

Elektromotoren mit dem erfindungsgemäßen Stator können vorteilhafterweise in Verbindung mit einem geöffneten Rotor und/oder mit einem geöffneten Motor-/Statorgehäuse eingesetzt werden, die eine optimale Luftkühlung der Wicklung und des Kugellagers mit sich bringt. Hierdurch können neue Anwendungsgebiete herkömmlicher Elektromotoren erschlossen werden.

Ferner ist günstig, dass durch die erfindungsgemäßen Vorsprünge an den Zähnen des Stators der höhere Verschmutzungsgrad unter Nutzung desselben Bauraums erreicht werden kann, d.h. Anpassungen an der Geometrie oder der Ausstattung des Elektromotors sind nicht nötig.

Der jeweils an den Zähnen vorgesehene und in die Nutöffnung weisende Vorsprung kann ferner als Prallfläche für den Umspritzungsprozess des Nutinneren dienen. Die Vorsprünge vergrößern den Querschnitt im Nutöffnungsbereich, dienen als eine Art Fließhilfe für das eingespritzte Isolationsmaterial und verhindern dabei Überspritzer nach radial außen sowie Flitterbildung in der Nutöffnung (Nutschlitz), welche den Wicklungsprozess der Drahtwicklungen negativ beeinträchtigen würden. Beim Einspritzen von zunächst flüssigem heißem Isolationsmaterial - vornehmlich flüssigem Kunststoff - in die Nuten mit hohem Druck härtet das Isolationsmaterial an der Anlagefläche aufgrund des hohen Temperaturunterschieds sofort aus bzw. wird deutlich weniger viskos und bildet somit eine Schutzschranke gegen Überspritzer nach radial außen. Aus demselben Grund können auch Überspritzer beim späteren Werkzeugnachdruck vermieden werden. Durch die Erhöhung der Querschnittsfläche im Nutöffnungsbereich kann zudem der Einspritzdruck und mithin die Gefahr von Überspritzern im Nutöffnungsbereich reduziert werden.

Ein weiter vorteilhafter Effekt der Vorsprünge ist, dass diese als Fließhilfe dienen können, da sich die Querschnittsfläche für die Umspritzmasse vergrößert und dadurch die Nuten des Stators besser befüllt werden. Dies hat weiter zur Folge, dass die Materialdicke der Isolationsschicht reduziert werden kann.

In einer vorteilhaften Ausführungsvariante ist vorgesehen, dass der jeweilige Vorsprung radial außenseitig einen Teil einer Außenmantelfläche des Stators bildet. Das bedeutet, dass die Vorsprünge in Umfangsrichtung als Verlängerung des Außenrandes der jeweiligen Zähne ausgebildet sind. Isolationsmaterial kann bis zu einem radial weit außen liegenden Bereich der Vorsprünge in die Nuten eingebracht werden. Das bis an die Anlageflächen der Vorsprünge verteilte Isolationsmaterial bietet einen vergrößerten Abstand bzw. eine vergrößerte Luft- und Kriechstrecke zu den radial weiter innen innerhalb der Nuten aufgenommenen Drahtwicklungen.

In einer erfindungsgemäßen Ausführung ist vorgesehen, dass die Anlagenflächenbreite in Umfangsrichtung der Vorsprungsbreite in Umfangsrichtung entspricht. Die Größe des jeweiligen Vorsprungs wird somit durch die Breite der nach radial innen weisenden Anlagenfläche bestimmt. Ein sich unmittelbar radial einwärts an den Vorsprung anschließender Innenabschnitt der radialen Außenrandabschnitte der Zähne weist zudem eine in Richtung der Nutöffnung gewölbte Rundung auf. Das bedeutet, dass der jeweilige Vorsprung als Abschluss der Anlagenfläche eine Kante bildet, an die sich die Rundung des Innenabschnitts unmittelbar anschließt. Als Ausführungsbeispiele der Rundung sind erfindungsgemäß vorgegebene Radien, Korbbögen oder Freiformen umfasst. Deren Ausführung und Größe wird erfindungsgemäß weitestgehend und mit tangentialen Übergängen an die Polschuhdicke angepasst. Dabei wird ein Verhältnis von Polschuhdicke zu den Radien auf vorzugsweise auf einen Bereich zwischen 0,5 - 1,5, weiter bevorzugt 0,8 - 1,2 festgelegt.

Die Größe des jeweiligen Vorsprungs wird in einem erfindungsgemäßen Ausführungsbeispiel dadurch festgelegt, dass ein Verhältnis der Vorsprungsbreite in Umfangsrichtung zu einer Nutöffnungsbreite in Umfangsrichtung in einem Bereich von 0,1 - 0,15 liegt. Die Vorsprungsbreite wird möglichst klein jedoch ausreichend groß gewählt, dass die Mindestisolationsdicke des Umspritzungsmaterials abgebildet werden kann.

Ferner wird ein Verhältnis der Vorsprungsbreite erfindungsgemäß in Umfangsrichtung zur Vorsprungsdicke in radialer Richtung vorzugsweise auf einen Bereich von 0,5 - 1,0 festgelegt.

Die vorgesehenen Größenverhältnisse gewährleisten die oben beschriebenen Vorteile hinsichtlich der Luft- und Kriechstrecke sowie der verbesserten Einbringbarkeit von Isolationsmaterial in die Nuten. Zudem ermöglichen die genannten Größenverhältnisse einen ausreichend großen Eisenanteil des Statormaterials im Bereich der Nutöffnung, der unmittelbar positive Auswirkung auf den magnetischen Kreis, d.h. das Drehmoment, den Wirkungsgrad und das Rastmoment hat.

Der erfindungsgemäße Stator ist in einer Ausführungsvariante ausgebildet, dass er in axialer Richtung eine Vielzahl von Statorblechen mit jeweils einer bestimmten axialen Statorblechdicke aufweist, wobei die vorgesehene Vorsprungsbreite jedoch größer dimensioniert ist als die Statorblechdicke. Vorsprünge mit der erfindungsgemäßen Breite ermöglichen eine ausreichende Festigkeit, sind prozesssicher stanzbar und widerstehen den hohen Einspritzdrücken beim Einbringen des Isolationsmaterials.

Die Form des jeweiligen Vorsprungs weist in einer günstigen Ausführungsform bei einer axialen Draufsicht einen rechteckigen Querschnitt auf. Als "rechteckiger Querschnitt" ist dabei ausdrücklich eine nicht scharfkantige Ausführung definiert, die fertigungstechnisch bedingte Stanzradien von beispielsweise 0,15mm mit umfasst.

Zur Erfindung gehört auch eine Ausführung des Stators mit isolierender Umspritzung aus Kunststoff in den Nuten, wobei die Umspritzung zumindest eine Innenwandfläche der Nuten und die nach radial innen gerichtete freie Anlagefläche des Vorsprungs überdeckt. In den isolierten Nuten werden die Drahtwicklungen, vorzugsweise aus Kupferlackdraht aufgenommen.

In einem günstigen Anwendungsbeispiel von erfindungsgemäßen Statoren von Elektromotoren ist die Vorsprungsbreite in Umfangsrichtung zwischen 0,1 - 1mm.

Der eingesetzte Wickeldraht weist einen vorbestimmten und von der Motorauslegung abhängigen Drahtdurchmesser auf, wobei das bevorzugte Verhältnis von Nutöffnungsbreite zu dem Drahtdurchmesser bei 2,1 - 3,5, insbesondere bevorzugt bei 2,5 liegt. Hierdurch ist das Rastmomentverhalten des Elektromotors besonders günstig. Vorzugsweise wird eine möglichst geringe Nutöffnungsbreite gewählt. Dabei ist darauf zu achten, dass der Wickeldraht fertigungstechnisch und wirtschaftlich verlegt werden kann.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen Stator gemäß dem Stand der Technik in perspektivischer Ansicht,
- Fig. 2: eine seitliche Teil-Schnittansicht des Stator aus Figur 1,
- Fig. 3: eine seitliche Teil-Schnittansicht des erfindungsgemäßen Außen-läufer-Stators,
- Fig. 4: eine Detailansicht von zwei benachbarten Statorzähnen eines Stators gemäß Figur 3 in einer Seitenansicht;
- Fig. 5: eine seitliche Teil-Schnittansicht des erfindungsgemäßen Innen-läufer-Stators.

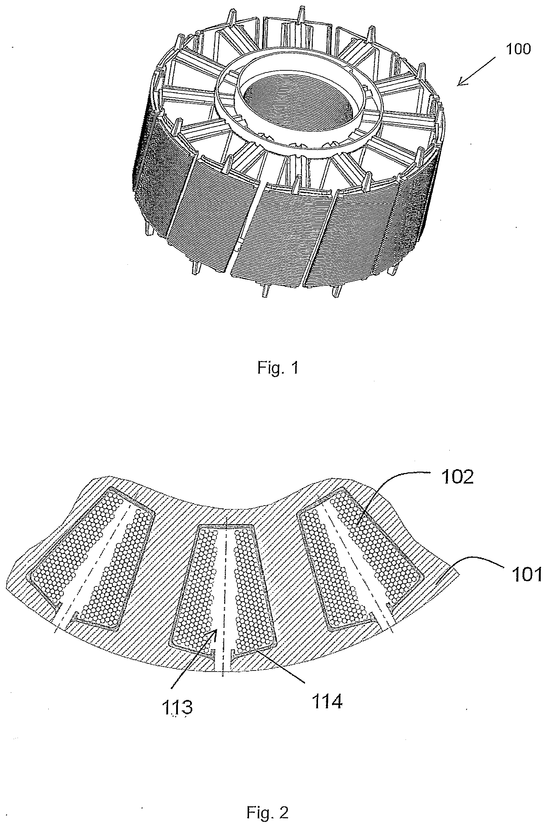

In den Figuren 1 und 2 ist ein Stator 100 gemäß dem Stand der Technik mit in Umfangsrichtung verteilt angeordneten Zähnen 101 dargestellt, wobei zwischen den Zähnen 101 jeweils Nuten 113 zur Aufnahme von Wickeldraht 102 vorgesehen sind. Die Wickeldrähte 102 sind durch eine Umspritzung 114 in den Nuten 113 gegenüber dem Statorblech isoliert. Die gezeigte Ausführung weist eine relativ kurze Luft- und Kriechstrecke zwischen dem Wickeldraht 102 und dem Statorblech der Zähne 101 auf, so dass der Stator zum Einsatz bei einem Verschmutzungsgrad 2 ausgebildet ist, Verschmutzungsgrad 2 ist derart definiert, dass nur nicht leitfähige Verschmutzung auftritt, gelegentlich jedoch mit vorübergehender Leitfähigkeit durch Betauung gerechnet werden muss.

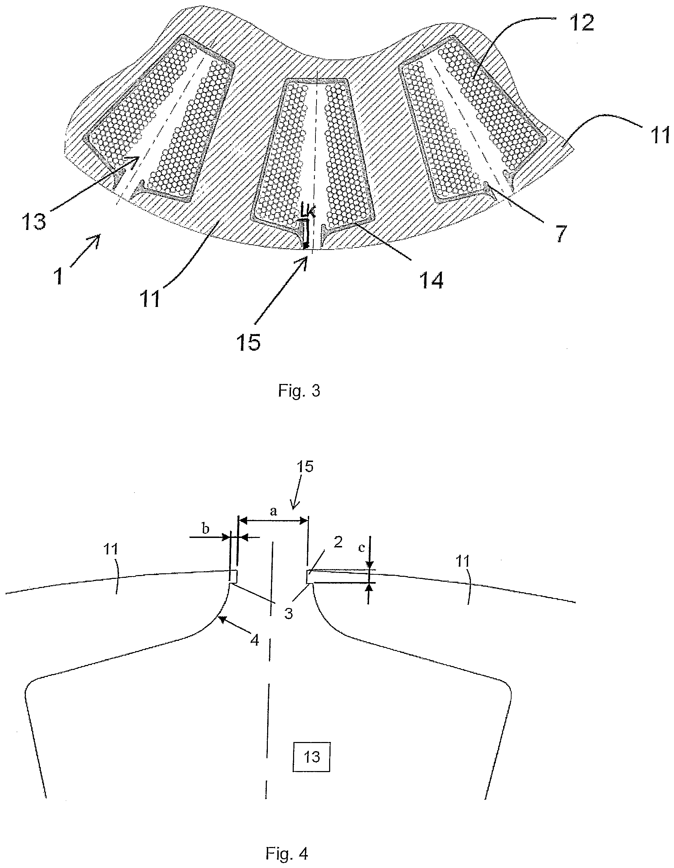

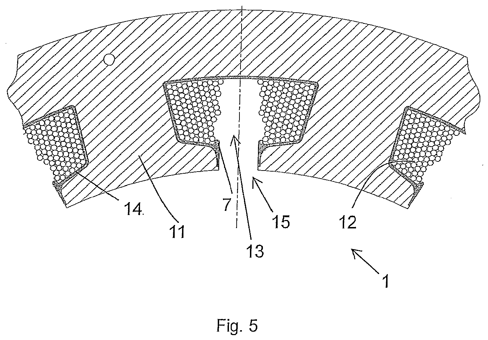

Die Figuren 3 und 4 zeigen ein Ausführungsbeispiel des erfindungsgemäßen Stators 1 als Außenläufer-Stator zum Einsatz in Verschmutzungsgrad 3, der derart definiert ist, dass leitfähige Verschmutzung oder trockene, nicht leitfähige Verschmutzung auftritt, die deshalb auch leitfähig wird, da Betauung zu erwarten ist. Sämtliche für das Ausführungsbeispiel gemäß Figur 3 offenbarten Merkmale gelten mutatis mutandis auch für die Ausführung gemäß Figur 5, in welcher der erfindungsgemäße Stator 1 als Innenläufer-Stator gezeigt ist.

Der grundsätzliche Aufbau des Stators 1 der Figuren 3 und 4 entspricht demjenigen gemäß Figur 1. Der Stator 1 umfasst sich in radialer Richtung erstreckende Zähne 11 mit im Querschnitt T-förmigen radialen Außenrandabschnitten und jeweils zwischen den Zähnen 11 vorgesehenen Nuten 13, wobei jeweils benachbarte Zähne 11 an ihren radialen Außenrandabschnitten jeweils eine Nutöffnung 15 bilden, über die der Wickeldraht 12 vorzugsweise durch eine Nadel und/oder Flyerwickeln in die Nuten 13 eingebracht wird. Über die Nutöffnungen 15 gelangt auch die Verschmutzung in die Nuten 13, die im ungünstigsten Fall zum Kurzschluss zwischen dem Wickeldraht 12 und den Zähnen 11 führen kann. Zur Vermeidung ist bei der Ausbildung gemäß der Figuren 3 und 4 die Luft- und Kriechstrecke LK zwischen dem Wickeldraht 12 und dem leitenden Material der Zähne 11 gegenüber der aus dem Stand der Technik bekannten Lösung vergrößert. Die radialen Außenrandabschnitte der Zähne 11 weisen beidseitig jeweils einen sich in Umfangsrichtung in die Nutöffnung 15 erstreckenden Vorsprung 2 auf, der jeweils eine nach radial innen gerichtete freie Anlagefläche 3 bildet. Die Vorsprünge 2 erstrecken sich entlang der Außenmantelfläche des Stators 1 und bilden außenseitig einen bündigen Fortsatz der Zähne 11. Die Anlagefläche 3 endet mit einer Kante, an die sich unmittelbar radial einwärts der Innenabschnitt 4 anschließt. Der Innenabschnitt 4 ist mit einer konvexen Rundung ausgebildet.

In dem gezeigten Ausführungsbeispiel gemäß Figur 4 ist die Größe des jeweiligen Vorsprungs 2 derart dimensioniert, dass das Verhältnis b/a der Vorsprungsbreite b in Umfangsrichtung zur Nutöffnungsbreite a in Umfangsrichtung bei 0,12 liegt. Das Verhältnis b/c der Vorsprungsbreite b zur Vorsprungsdicke c in radialer Richtung ist auf 0,7 festgelegt. Die Vorsprungsbreite b ist dabei definiert als die Breite der Anlagefläche 3. Im Bereich des sich jeweils in Umfangsrichtung erstreckenden Vorsprungs 2 ist die Nutöffnungsbreite a am geringsten. Die oben genannten Werte beziehen sich auf die Nutöffnungsbreite in diesem Bereich. Die Form des Vorsprungs 2 weist gemäß Figur 4 einen rechteckigen Querschnitt auf, wobei die beim Stanzen der Statorbleche erzeugten Stanzradien zu berücksichtigen sind.

Figur 3 zeigt den Stator 1 mit in den Nuten 13 eingespritzter isolierender Kunststoffumspritzung 14, welche die gesamte Innenwandfläche der Nuten 13 überdeckt. Im Bereich des jeweiligen Vorsprungs 2 erstreckt sich die

Umspritzung 14 bis zur jeweiligen nach radial innen gerichteten freien Anlagefläche 3 und bedeckt diese vollständig. Durch den jeweiligen Vorsprung 2 und die daraus gebildete Anlagefläche 3 verlängert sich die isolierte Fläche innerhalb der Nuten 13 weiter nach radial außen, so dass die Luft- und Kriechstrecke LK vergrößert wird. Zur Fixierung des Wickeldrahtes 12 innerhalb der Nuten 13 umfasst die Umspritzung Haltenasen 7, die sich radial einwärts erstrecken und ein Herausgleiten des Wickeldrahts 12 aus der Nutöffnung 15 verhindert.

Der eingesetzte Wickeldraht 12 ist ein Kupferlackdraht mit einem vorbestimmten, von der Motorleistung abhängigen Drahtdurchmesser.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können die Randbereiche der sich in die Nutöffnung erstreckenden Vorsprünge abgerundet sein, um eine Einführung der Draht-Wickelnadel zu vereinfachen. Zur Vergrößerung der Kriechstrecke kann der Vorsprung jeweils auch eine axiale Nut aufweisen, die sich beispielsweise mittig entlang des Vorsprungs erstreckt.

## Patentansprüche

1. Stator eines Elektromotors mit in Umfangsrichtung verteilten, sich in radialer Richtung erstreckenden Zähnen (11) und jeweils zwischen den Zähnen (11) vorgesehenen Nuten (13), wobei jeweils benachbarte Zähne (11) an ihren radialen Außenrandabschnitten jeweils eine Nutöffnung (15) bilden, und die radialen Außenrandabschnitte der Zähne (11) jeweils einen sich in Umfangsrichturig in die Nutöffnung (15) erstreckenden Vorsprung (2) aufweisen, der jeweils eine nach radial innen gerichtete freie Anlagefläche (3) bildet, wobei eine Anlagenflächenbreite in Umfangerichturtg einer Vorsprungsbreite
(b) in Umfangsrichtung entspricht, und
ein Verhältnis b/a der Vorsprungsbreite
(b) in Umfangsrichtung zu einer Nutöffnungsbreite
(a) in Umfangsrichtung in einem Bereich von 0.1 - 0.15 und ein Verhältnis b/c der Vorsprungsbreite
(b) Umfangs-richtung zu einer Vorsprungsdicke
(c) in radialer Richtung in einem Bereich von 0,5 - 1,0 liegen.

2. Stator nach Anspruch 1, **dadurch gekennzeichnet, dass** der Vorsprung (2) jeweils radial außenseltig einen Teil einer Außenmantelfläche des Stators (1) bildet.

3. Stator nach zumindest einem der vorigen Ansprüche, **dadurch gekennzeichnet, dass** ein sich unmittelbar radial einwärts an den Vorsprung (2) anschließender Innenabschnitt (4) der radialen Außenrandabschnitte der Zähne (11) jeweils eine Rundung aufweist.

4. Stator nach zumindest einem der vorigen Ansprüche, **dadurch gekennzeichnet, dass** der jeweilige Vorsprung (2) bei einer axialen Draufsicht einen rechteckigen Querschnitt aufweist.

5. Stator nach zumindest einem der vorigen Ansprüche 1 bis 4, **dadurch gekennzeichnet, dass** er in axialer Richtung eine Vielzahl von Statorblechen mit jeweils einer axialen Statorblechdicke aufweist, wobei die Vorsprungsbreite
(b) größer ist als die Statorblechdicke.

6. Stator nach zumindest einem der vorigen Ansprüche, **dadurch gekennzeichnet, dass** die Nuten (13) eine isolierende Umspritzung (14) aus Kunststoff aufweisen, die zumindest eine Innenwandfläche der Nuten (13) und die nach radial innen gerichtete freie Anlagefläche (3) des Vorsprungs (2) überdeckt.

7. Stator nach zumindest einem der vorigen Ansprüche 1 bis 6, **dadurch gekennzeichnet, dass** die Nutöffnungsbreite
(a) im Bereich des sich jeweils in Umfangsrichtung erstreckenden Vorsprungs (2) am geringsten ist.

8. Stator nach zumindest einem der vorigen Ansprüche 1 bis 7, **dadurch gekennzeichnet dass** die Vorsprungsbreite
(b) in Umfangsrichtung zwischen 0,1 - 1mm ist.

## Claims

1. A stator of an electric motor, having teeth (11) distributed in the circumferential direction and extending in the radial direction and grooves (13) respectively provided between the teeth (11), wherein respectively adjacent teeth (11) each form a groove opening (15) at the radial outer edge sections of said teeth, and the radial outer edge sections of the teeth (11) each have a projection (2) extending into the groove opening (15) in the circumferential direction, said projection respectively forming a free contact surface (3) directed radially inward, wherein a contact surface width in the circumferential direction corresponds to a projection width (b) in the circumferential direction, and a ratio b/a of the projection width (b) in the circumferential direction to a groove opening width (a) in the circumferential direction is in a range of 0.1 to 0.15 and a radio b/c of the projection width (b) in the circumferential direction to a projection thickness (c) in the radial direction is in a range of 0.5 to 1.0.

2. The stator according to Claim 1, **characterized in that** the projection (2) respectively forms radially outward a portion of an outer jacket surface of the stator (1).

3. The stator according to at least one of the preceding claims, **characterized in that** inner section (4) of the radial outer edge sections of the teeth (11), directly adjoining the projection (2) radially inward, respectively comprises a rounding.

4. The stator according to at least one of the preceding claims, **characterized in that**, in an axial top view, the respective projection (2) has a rectangular cross section.

5. The stator according to at least one of the preceding claims 1 to 4, **characterized in that**, in the axial direction, it comprises a plurality of stator sheets each having an axial stator sheet thickness, wherein the projection width (b) is greater than the stator sheet thickness.

6. The stator according to at least one of the preceding claims, **characterized in that** the grooves (13) have an insulating overmold (14) made of plastic, which covers at least one inner wall surface of the grooves (13) and the radially inward directed free contact surface (3) of the projection (2).

7. The stator according to at least one of the preceding claims 1 to 6, **characterized in that** the groove opening width (a) is smallest in the area of the respective projection (2) extending in the circumferential direction.

8. The stator according to at least one of the preceding claims 1 to 7, **characterized in that** the projection width (b) in the circumferential direction is between 0.1 to 1 mm.

## Revendications

1. Stator d'un moteur électrique, comprenant des dents (11), réparties dans la direction circonférentielle et s'étendant dans la direction radiale, et des rainures (13) prévues respectivement entre les dents (11), dans lequel des dents (11) respectivement voisines forment au niveau de leurs parties de bord extérieur radiales respectivement une ouverture de rainure (15), et les parties de bord extérieur radiales des dents (11) présentent respectivement une saillie (2) s'étendant dans la direction circonférentielle dans l'ouverture de rainure (15) et formant respectivement une surface d'appui libre (3) tournée radialement vers l'intérieur, dans lequel une largeur de surface d'appui dans la direction circonférentielle correspond à une largeur de saillie dans la direction circonférentielle, et un rapport b/a entre la largeur de saillie dans la direction circonférentielle et une largeur d'ouverture de rainure dans la direction circonférentielle est compris dans une plage de 0,1 à 0,15, et un rapport b/c entre la largeur de saillie dans la direction circonférentielle et une épaisseur de saillie dans la direction radiale est compris dans une plage de 0,5 à 1,0.

2. Stator selon la revendication 1, **caractérisé en ce que** la saillie (2) forme une partie d'une surface latérale extérieure du stator (1) côté radialement extérieur respectivement.

3. Stator selon au moins l'une des revendications précédentes, **caractérisé en ce qu'**une partie intérieure (4), directement adjacente à la saillie (2) radialement vers l'intérieur, des parties de bord extérieur radiales des dents (11) présente respectivement un arrondi.

4. Stator selon au moins l'une des revendications précédentes, **caractérisé en ce que** la saillie (2) respective présente une section transversale rectangulaire en vue de dessus axiale.

5. Stator selon au moins l'une des revendications précédentes 1 à 4, **caractérisé en ce qu'**il présente dans la direction axiale une pluralité de tôles statoriques ayant respectivement une épaisseur de tôle statorique axiale, la largeur de saillie étant supérieure à l'épaisseur de tôle statorique.

6. Stator selon au moins l'une des revendications précédentes, **caractérisé en ce que** les rainures (13) présentent un surmoulage isolant (14) en matière plastique qui recouvre ladite au moins une surface de paroi intérieure des rainures (13) et la surface d'appui libre (3), tournée radialement vers l'intérieur, de la saillie (2).

7. Stator selon au moins l'une des revendications précédentes 1 à 6, **caractérisé en ce que** la largeur d'ouverture de rainure est la plus réduite dans la zone de la saillie (2) s'étendant respectivement dans la direction circonférentielle.

8. Stator selon au moins l'une des revendications précédentes 1 à 7, **caractérisé en ce que** la largeur de saillie dans la direction circonférentielle est comprise entre 0,1 et 1 mm.
